# EUROPEAN PATENT SPECIFICATION

(11) **EP 1 650 087 B1**
(45) Date of publication and mention of the grant of the patent: **26.11.2008**
(21) Application number: 05023006.9
(22) Date of filing: 21.10.2005
(51) Int. Cl.: B60R 21/16

(54) **Airbag device**
Airbagvorrichtung
Dispositif d'airbag

(30) Priority: 21.10.2004 US 620441 P
(43) Date of publication of application: 26.04.2006
(73) Proprietor: TAKATA CORPORATION, Minato-ku, Tokyo 106-8510 (JP)
(72) Inventor: Heym, Axel, 63743 Aschaffenburg (DE); Pausch, Tobias, Echigawa-cho Echigun, Shiga 529-1388 (JP)
(74) Representative: Banzer, Hans-Jörg

(56) References cited:
- EP-A- 1 364 840
- EP-A2- 1 364 838
- DE-A1- 19 926 486
- DE-U1- 20 102 115
- JP-A- 4 201 644
- JP-A- 4 292 239
- US-A1- 2004 155 439

## Description

### BACKGROUND

The invention relates to a driver's or front passenger's airbag for motor vehicles.

An airbag of this type is used for protecting a motor vehicle occupant in a "head-on crash" in which a vehicle collides head on with an obstacle. This type of airbag, in particular, is used for avoiding a collision of one of the front vehicle occupants with the windshield, the steering wheel or the dashboard. The airbag of a generic driver's or front passenger's airbag has at least two airbag sections which are separated from each other so that the airbag, which is inflated by means of a gas generator, is provided on its front side facing the occupant to be protected, with a gap running between the airbag sections, and the airbag sections are connected to one another exclusively on the rear side facing away from the occupant to be protected.

DE 100 33 937 A1 discloses an airbag for an occupant protection device in 1motor vehicles, which can be inflated by means of a gas generator and, when inflated, the outer covering of which forms a gap on its covering surface assigned to the occupant to be protected. The occupant to be protected may penetrate into the gap with a body part which faces the airbag. If the occupant is out of position ("OOP") during inflation of the airbag, the gap is expanded in order to reduce the collision of the occupant with the assigned covering surface of the airbag. In addition, means, for example in the form of a sheet or sheet-like element, may be provided in order to brace the airbag sections, which are separated from one another by the gap, relative to one another, so that after inflation the airbag forms the same protection for an occupant in a normal position as a airbag without a gap. However, it is ensured here by means of the arrangement and design of the sheet or sheet-like element that an occupant who is outside his/her normal sitting position and is bent forward toward the airbag module (corresponding to the "out of position situation") may penetrate into the airbag gap during inflation of the airbag.

DE 201 02 115 U1 discloses an "annular airbag" for a driver's or front passenger's airbag module, which has a chamber that is to be inflated annularly and which surrounds an inner indentation facing the occupant to be protected. With airbags of this type, the intention is to obtain better restraint values if the occupant is out of position, by the fact that the front side of the airbag that faces the occupant is accelerated less severely than in the case of airbags without an annular chamber and, by this means the risk of the occupant being injured as a consequence of colliding with the unfolding airbag is reduced. In this case, a closure part is fastened to the airbag wall so that, when the airbag is inflated, said closure part slides in front of the mouth of the indentation and thereby closes the indentation. As a result, the vehicle occupant to be protected cannot penetrate into the indentation.

In EP 1 364 840 A1, a driver or passenger airbag is disclosed, which comprises two airbag sections separated from each other, forming a gap between the two airbag sections. A sheet-like element is provided so as to cover the gap between the airbag sections.

In EP 1 364 838 A2, an airbag having a left half airbag, a right half airbag, and a tie panel connecting the occupant-side front ends of the left and right half airbags is described.

In US 2004/0155439 A1, an airbag device is disclosed which includes an airbag and an inflator. The airbag includes a left half airbag and a right half airbag. The distal ends of the left half airbag and the right half airbag are spaced apart from each other so as to form an empty space there between. This known airbag device generally corresponds to the features as defined in the preamble of independent claim 1.

The disadvantage of the known airbags for an airbag module is that in spite of the reduced mechanical load on the occupant to be protected, said airbags may, if the occupant is out of position, lead to a thermal load on the occupant to be protected if said occupant comes into contact with hot fabric parts of the airbag, i.e. with fabric parts of the airbag covering which have been heated by the hot gases used for inflation of the airbag.

It is the object of the invention to overcome or at least to mitigate the disadvantage of the known airbags.

### SUMMARY

According to the invention, this object is achieved by an airbag module as defined in claim 1. The dependent claims define preferred and advantageous embodiments of the invention.

It is to be understood that both the foregoing general description and the following detailed description are exemplary and explanatory only, and are not restrictive of the invention as claimed.

### BRIEF DESCRIPTION OF THE DRAWINGS

Features, aspects and advantages of the present invention will become apparent from the following description, appended claims, and the accompanying exemplary embodiments shown in the drawings, which are briefly described below.
Fig. 1a shows a perspective illustration of a airbag which comprises two airbag sections and, on its front side, has a gap spanned by a sheet or sheet-like element.
Fig. 1b shows the airbag from Fig. 1a, installed in a motor vehicle.
Fig. 1c shows the arrangement from Fig. 1b as a vehicle occupant to be protected plunges into the airbag.
Figs. 1d-1g show different views of the airbag from Fig. 1a.
Fig. 2a shows a schematic illustration of the lower panel of a airbag which consists of two airbag sections and, in its front side, forms a gap.
Fig. 2b shows a airbag corresponding to Fig. 2a when inflated within a motor vehicle.
Fig. 2c shows a front view of a airbag according to Fig. 2a with a sheet or sheet-like element spanning the gap.
Fig. 2d shows a airbag corresponding to Fig. 2a as the airbag unfolds from a module housing.
Fig. 2e shows the airbag from Fig. 2d after the airbag has completely unfolded.
Fig. 3a shows a schematic illustration of a folded airbag which is arranged within a module housing and has two airbag sections, which are separated from each other by means of a gap, and a sheet or sheet-like element for spanning the gap.
Fig. 3b shows the airbag from Fig. 3a as the airbag unfolds.
Fig. 3c shows the airbag from Figs. 3a and 3b when unfolded.
Fig. 4a shows an illustration corresponding to Fig. 3a, with the vehicle occupant to be protected additionally being shown out of position.
Fig. 4b shows an illustration corresponding to Fig. 3b, in which the unfolding of the airbag is influenced by a vehicle occupant who is out of position.
Fig. 4c shows an illustration corresponding to Fig. 3c with a vehicle occupant who is out of position.
Fig. 5a is a side view of another airbag.
Fig. 5b shows a front plan view of the airbag according to the airbag arrangement from Fig. 5a.
Fig. 6a is a side view of an alternative airbag.
Fig. 6b is a front plan view of the airbag of the airbag arrangement from Fig. 6a.
Fig. 7a is a side view of yet another a airbag.
Fig. 7b is a front plan view of the airbag of the airbag arrangement from Fig. 7a.
Fig. 8 is a side view of still another alternative airbag.
Fig. 9 is a view of an alternative airbag.
Fig. 10 is a perspective view of an alternative passenger side airbag.
Fig. 11 is a perspective view of several components of a passenger side airbag module.
Fig. 12 is a top plan view of an outer fabric panel used in the construction of a passenger side airbag.
Fig. 13 is a side view of the outer fabric panel and protective cloth taken through cross-section A-A of Fig. 12.
Fig. 14 is a top plan view of the outer fabric panel of Fig. 12 showing the holes surrounding the inflator opening.
Fig. 15 is a top plan view of an inner fabric panel used in the construction of a passenger side airbag.
Fig. 16 is a top plan view of a passenger side airbag during construction showing the connection between the inner and outer fabric panels.
Fig. 17 is a top plan view of the airbag of Fig. 16 after the fabric panels have been folded and the membrane has been sewn to the connected inner and outer fabric panels.
Fig. 18 is a top plan view of the airbag of Fig. 16 after the fabric panels have been folded and connected at the vent holes.
Fig. 19 is a side view of the assembled airbag taken through cross-section B-B of Fig. 18.
Fig. 20 is a top view of the airbag of FIG. 16 after inflation.
Fig. 21 is a side view of the assembled airbag taken through cross-section C-C of Fig. 18.
Fig. 22 is a side view of an another embodiment of an airbag taken through cross-section C-C of Fig. 18.

### DETAILED DESCRIPTION

As mentioned above, an exemplary embodiment of the present invention includes an airbag for protecting an occupant seated in the front row of the vehicle. The airbag is configured to be inflated in a head-on collision to protect the motor vehicle occupant. The airbag includes two airbag sections which are separated from one another so that the inflated airbag has, on its front side facing the occupant to be protected, a gap which runs between the airbag sections. The gap is spanned by a sheet or sheet-like element so that, in the case of an impact directed toward the front side of the airbag, the occupant to be protected is intercepted by the sheet or sheet-like element.

As a result, a body part of the occupant may penetrate into the gap for a certain distance; but the occupant is not permitted to completely penetrate into the gap past the sheet or sheet-like element. The airbag and sheet or sheet-like element provides for the restraining action for protecting a vehicle occupant to be essentially taken on by the sheet or sheet-like element and, as a result, the two inflatable airbag sections are used essentially only for the purpose of tightening the sheet or sheet-like element. As a result, the restraining action required for protecting the vehicle occupant is achieved with the occupant coming into contact with the covering of the airbag and not with portions of the airbag which are possibly hot.

According to one exemplary embodiment, the sheet or sheet-like element extends directly in front of the front end of the airbag, which faces the upper body and the head of the occupant to be protected, i.e. directly along the front side of the airbag, so that the gap - as seen from the head and upper body of the occupant to be protected - is completely covered by the sheet or sheet-like element. According to another embodiment of the invention, the sheet or sheet-like element is offset slightly to the rear, toward the rear side of the airbag, which side faces away from the head and upper body of the vehicle occupant, relative to the front end (of the front side) of the airbag, which end faces the head and upper body of the vehicle occupant to be protected, so that part of the gap formed between the airbag sections - as seen from the head and upper body of the vehicle occupant - runs in front of the sheet or sheet-like element. The vehicle occupant, prior to impacting against the sheet or sheet-like element, initially penetrates for a certain distance into that region of the gap between the two airbag sections which is not covered by the sheet or sheet-like element before the occupant is intercepted by the sheet or sheet-like element.

The sheet or sheet-like element may be fastened at least one point to each of the airbag sections separated from one another by means of the gap, and in this case preferably has at least three fastening points in total. The effect achieved by this is that the sheet or sheet-like element is fastened nondisplaceably to the airbag.

During inflation of the airbag the sheet or sheet-like element is tightened, so that it can deploy the required restraining action, and, at the same time, the airbag sections separated from one another by means of the gap are braced relative to one another.

It should be taken into consideration here that the bracing of the airbag sections at the points at which the two airbag sections come into contact causes contact forces which have the tendency to push the airbag sections apart again. This is counteracted, however, by the sheet or sheet-like element, in which case the contact forces additionally contribute to tightening the sheet or sheet-like element.

The sheet or sheet-like element spans the gap so that, in the case of an impact directed toward the front side of the airbag (and specifically also if the occupant is "out of position"), the occupant is intercepted by the sheet or sheet-like element, i.e. the sheet or sheet-like element is used as an actual restraining element. The occupant is accordingly preferably intercepted and held back by a region of the sheet or sheet-like element, behind which at least part of the gap runs, with the result that direct contact of the occupant with the airbag covering is avoided as much as possible.

The airbag sections are preferably designed and arranged so that during inflation of the airbag said airbag sections are in each case unfolded - as seen by the occupant to be protected - in a direction pointing next to the upper body of the occupant to be protected, so that the gap in the inflated airbag extends essentially in the longitudinal direction of the upper body of the occupant to be protected, i.e. parallel to the spinal column of the corresponding occupant.

According to exemplary embodiments , the sheet or sheet-like element itself may be designed, on the one hand, in a membrane-like manner, for example as a fabric part, or, on the other hand, as a net.

In order to fasten the sheet or sheet-like element to the airbag, seams may be used that also are used for connecting different parts of the airbag covering, for example a lower panel and upper panel of the airbag covering.

According to the invention, the airbag has precisely two airbag sections which are separated from each other by means of the gap and when inflated are arranged in an essentially V-shaped manner in cross section.

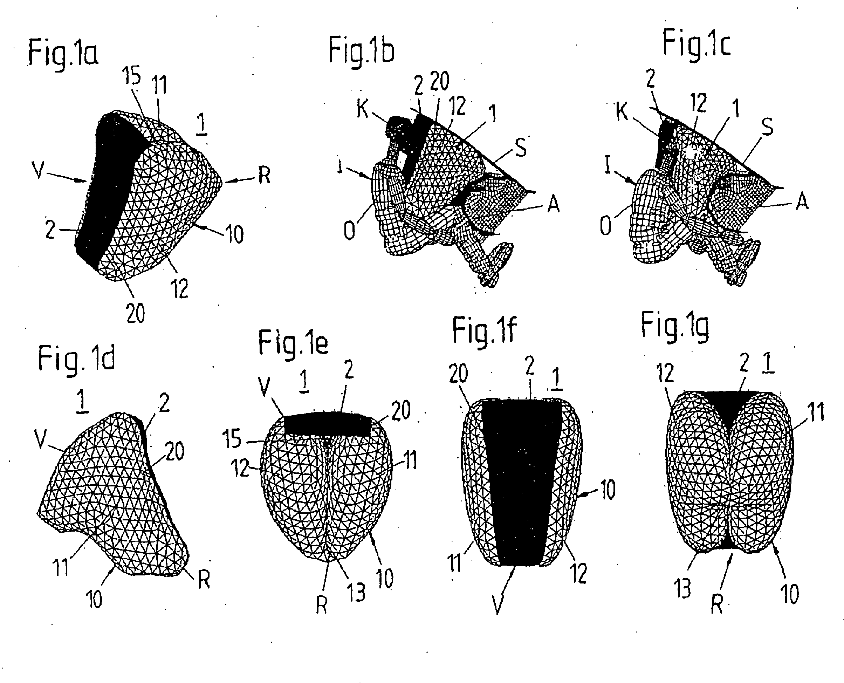

Figs. 1a and 1d to 1g illustrate a airbag 1, the airbag covering 10 of which has two airbag sections 11, 12 which are connected integrally to each other on the rear side R of the airbag 1. The two airbag sections 11, 12 are fluidly connected by means of a channel 13. On the front side V of the airbag 1, the two sections 11, 12 form a gap which is spanned by a sheet or sheet-like element 2 in the form of a membrane or a fabric part. The sheet-like element 2 is sewn along its outer edge 20 to each of the two airbag sections 11, 12, specifically so that, when the airbag 1 is inflated, the sheet-like element 2 is tightened and, at the same time, the two airbag sections 11, 12, which form a V in cross section, are braced relative to each other.

Fig. 1b shows the airbag from Fig. 1a when inflated in a motor vehicle. The airbag here is part of the front driver's airbag module arranged within the dashboard A of the motor vehicle, and when inflated extends between the dashboard A, the windshield S and the occupant I to be protected. The rear side R of the airbag is fastened to the dashboard A together with the other parts of the airbag module, namely a gas generator for inflating the airbag and a module housing for accommodating the airbag and gas generator. The front side V of the airbag faces the upper body O and the head K of the occupant I to be protected, specifically so that, in order to obtain the desired restraining action, the occupant I to be protected strikes with his/her head K and his/her upper body O against the sheet-like element 2, as illustrated with reference to Fig. 1c which shows the impact of the vehicle occupant I with his/her head K and his/her upper body O against the airbag comprising the airbag 1 and the sheet-like element 2. The gap 15 extends between the two airbag sections 11, 12 behind that region of the sheet-like element 2 against which the vehicle occupant I strikes with his/her head K and his/her upper body O, so that direct collision of the head K and upper body O of the vehicle occupant I with the covering 10 of the airbag 1 is avoided as much as possible. In addition, the depicted configuration makes self-centering of the head K and upper body O of the occupant I possible in the event of an eccentric impact against the sheet-like element 2.

When inflated, the airbag 1 tightens the sheet-like element 2, so that it can deploy the desired restraining action. At the same time, the airbag sections 11, 12 are sufficiently flexible because the gas used for inflating the airbag 1 is let out again directly after the airbag 1 has unfolded, with the result that the sheet-like element 2 even when tightened is still sufficiently deformable during the impact of the vehicle occupant I in order to avoid injuries to the vehicle occupant I which could occur if the sheet-like element 2 is clamped too rigidly in place.

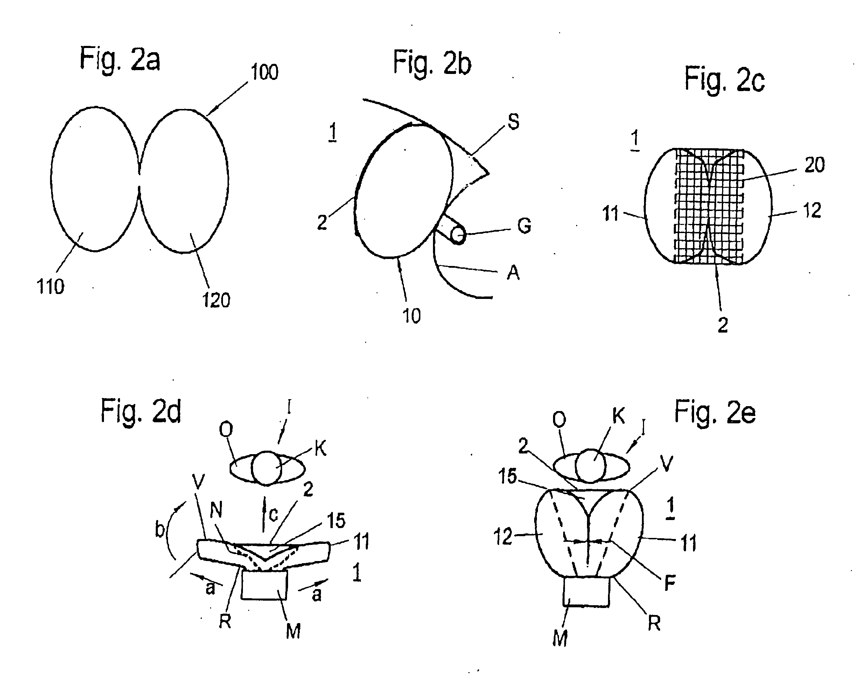

Fig. 2a shows a fabric part 100 forming the upper and lower panels of a airbag 1 of the type illustrated in Figs. 1a to 1g. The covering of the airbag 1 comprises two identical fabric parts 100 according to Fig. 2a connected to each other along a seam. Each of the two fabric parts 100 forming the upper and lower panels has in each case two elliptical sections 110, 120 which are connected integrally to each other, so that a airbag 1 having two airbag sections 11, 12 in accordance with Figs. 1a to 1g can be formed from the fabric parts.

Fig. 2b shows, in a schematic side view, a airbag 1, comprising two fabric parts 100 according to Fig. 2a, when inflated in a motor vehicle, the airbag 1 being part of a front passenger's airbag module arranged in the dashboard of the motor vehicle and being inflatable by a gas generator G which is arranged in the dashboard. When inflated the airbag 1 extends, as seen by the vehicle occupant (front passenger) to be protected, in front of the dashboard A and below the windshield S.

Fig. 2c shows a front view of an inflated airbag comprising the two fabric parts 100 according to Fig. 2a, the two airbag sections 11, 12 being separated from each other on the front side of the airbag that faces the occupant to be protected by means of a gap which is completely covered by a sheet-like element 2, and the sheet-like element 2 being sewn along its edge 20 to each of the airbag sections 11, 12.

Fig. 2d shows the airbag 1 as it unfolds out of the module housing M of a front passenger's airbag module by being inflated. It can be seen that the two airbag sections 11, 12 initially move at the beginning of the unfolding process outward in a direction "a" and next to the upper body O of the occupant I to be protected before, during further inflation, a movement takes place in a direction b toward the upper body O and the head K of the occupant to be protected. The two airbag sections 11, 12, which are separated from each other on the front side V of the airbag 1 by means of a gap 15, remain here, as is clear with reference to the side view of the completely inflated airbag in Fig. 2e, essentially in the lateral edge region of the upper body O of the vehicle occupant I to be protected. The central region of the upper body O (central chest and stomach region and also head K) is assigned the sheet-like element 2 which, on inflation, moves head-on in a direction c toward the occupant to be protected and which is tightened by the two airbag sections 11, 12.

Fig. 2e furthermore indicates the contact forces F which occur when the two airbag sections 11, 12 come into contact in the region of the gap 15 as the airbag unfolds. The forces F have the effect of pressing the airbag sections 11, 12 apart, and lead to tightening of the sheet-like element 2. The tension occurring in the sheet-like element 2 is influenced by the size of that region of the sheet-like element 2, which spans the gap 15. The shorter the distance between the fastening points of the sheet-like element 2 on both sides of the gap 15, the greater is the tension that occurs in the sheet-like element. This is caused by the contact forces, which increase at a shorter distance, at the contact faces between the airbag sections 11, 12. If that region of the sheet-like element 2 which spans the gap 15 is of a relatively large size (corresponding to a greater distance between the fastening points of the sheet-like element 2 on both sides of the gap 15 and therefore to a relatively large width of the gap 15), not only does lower tension occur, but the airbag sections 11, 12 unfold laterally outward to a more pronounced extent. The size of the sheet-like element 2 therefore also controls the arrangement of the airbag sections 11, 12 of the completely inflated airbag.

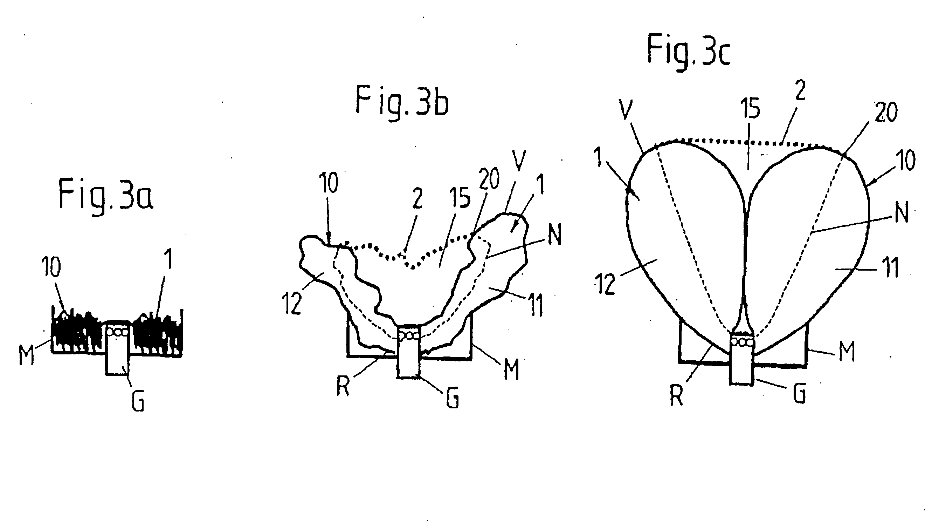

Fig. 3a shows, in greater detail, the airbag 1 from Figs. 1a to 2e, which is arranged within a module housing M of a front passenger's airbag module, the folded airbag 1 surrounding a gas generator G.

Fig. 3b shows in greater detail the beginning of the unfolding process of the airbag 1 out of the module housing M as the airbag is being inflated by means of a gas generator G, corresponding to the schematic illustration from Fig. 2d. Reference is made to the details in Fig. 2d for explanation. It can also be seen that, in order to fasten the sheet-like element 2 to the airbag sections 11, 12, use is made of the seam N that is used for connecting the two fabric parts (cf. Fig. 2a) of which the covering of the airbag 1 consists.

Fig. 3c shows in greater detail an illustration of the airbag which has been completely inflated by means of the gas generator G and is completely unfolded out of the module housing M, corresponding to the schematic illustration in Fig. 2e, to the explanation of which reference is made for further details.

In particular, it can be seen with reference to Figs. 3b and 3c that during the entire unfolding process of the airbag 1 the gap 15, which is formed between the two airbag sections 11, 12 on the front side V of the airbag 1, is always covered by the sheet-like element 2.

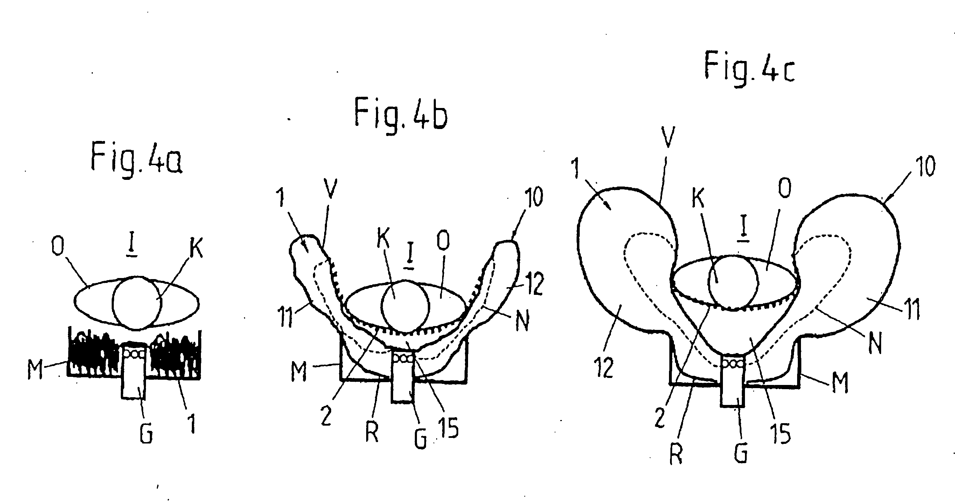

Fig. 4a discloses the airbag 1, which is folded in a module housing M, corresponding to Fig. 3a, but with a vehicle occupant I being situated with his/her upper body O and his/her head K very tightly in front of the module housing M. This corresponds to the occupant being "out of position" where the vehicle occupant is bent over forward out of his/her normal sitting position in the direction of the airbag module.

Figs. 4b and 4c show the airbag 1 at the beginning of the unfolding process and when completely inflated, corresponding to the illustration in Figs. 3b and 3c, but with the vehicle occupant I, who is bent over forward in the direction of the airbag module, influencing the unfolding process of the airbag 1. It is clear from Figs. 4b and 4c that because the vehicle occupant I has plunged at an early point into the region between the two airbag sections 11, 12, the two airbag sections 11, 12 unfold essentially laterally next to the upper body O and the head K of the vehicle occupant I to be protected, thus preventing the vehicle occupant I from being directly hit if he/she is out of position.

As in the situation in which the vehicle occupant I to be protected is in a normal sitting position, the restraining function in respect of the vehicle occupant I is also taken on here by the sheet-like element 2 which is fastened at its edge 20 to the two airbag sections 11, 12 and covers the gap 15 between the two airbag sections 11, 12. The penetration of the vehicle occupant I to be protected into the region between the two airbag sections 11, 12 at an early point when the occupant is out of position has the effect of displacing the sheet-like element 2, compared with the airbag being triggered with an occupant in a normal position, a short distance further in the direction of the rear side R of the airbag 1, with the result that the occupant I can penetrate with his/her upper body O a short distance further into the gap 15.

However, complete penetration of the occupant I with his/her upper body O into the gap 15 is prevented by the sheet-like element 2.

For an OOP situation, the present airbag avoids head-on impact of the occupant I with the airbag sections 11, 12. Instead, the occupant I is intercepted by the sheet-like element 2, which moves comparatively slowly toward the occupant I, with the result that the risk of injury to the occupant I is considerably reduced.

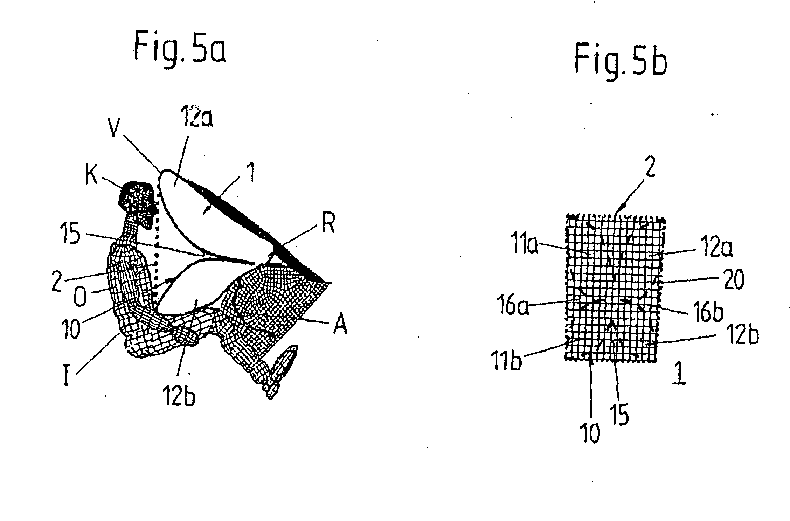

Figs. 5a and 5b discloses an alternative embodiment of a airbag 1, in which the two lateral airbag sections 11 a, 11b, on the one hand, and 12a, 12b, on the other hand, are in each case divided into two subsections 11a and 11b and 12a and 12b, with the result that the airbag has, in a front view according to Fig. 5b, an essentially star-shaped contour, and in which next to the slit 15 which separates the two airbag sections 11a, 11b, on the one hand, and 12a, 12b, on the other hand, from one another, two additional gaps 16a, 16b are formed which respectively separate the subsections 11a, 11b and 12a, 12b from each other.

Furthermore, in the exemplary embodiment shown in Figs. 5a and 5b, the sheet-like element 2 is designed as a net. In other respects, the embodiment shown in Figs. 5a-5b corresponds in its function to the exemplary embodiment explained with reference to Figs. 1a to 4c.

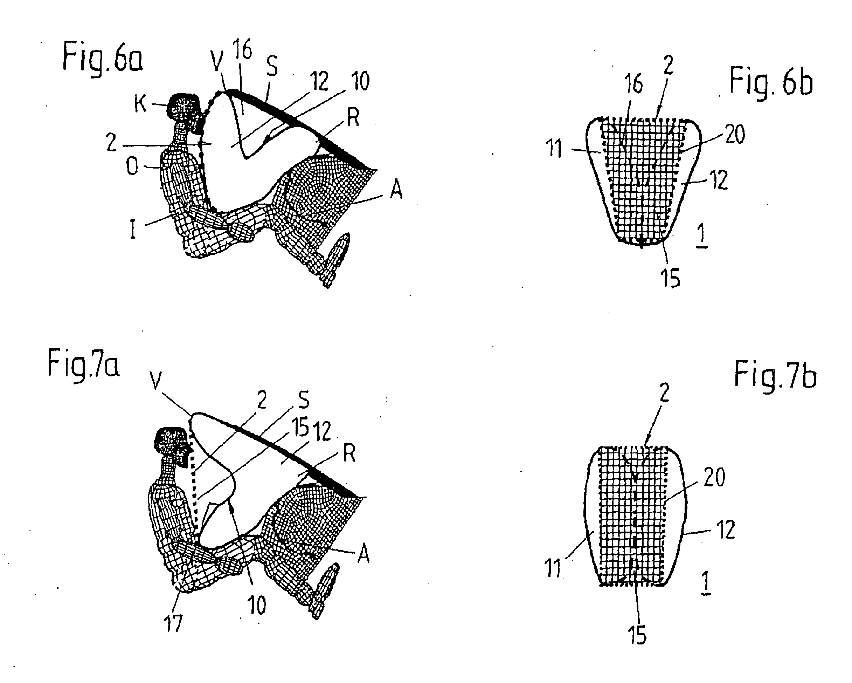

Figs. 6a and 6b show an exemplary embodiment of a airbag 1, in which, in contrast to the exemplary embodiment according to Figs. 1a to 4c, the two airbag sections 11, 12 are not only separated from each other by means of a gap 15 covered by the sheet-like element 2, but, moreover, also have a indentation 16 on their upper side but below the windshield S of a motor vehicle.

In the exemplary embodiment according to Figs. 7a and 7b, the two airbag sections 11, 12 additionally have an indentation 17 on their front side, i.e. a depression that extends toward the rear side R of the airbag 1.

In the case of the exemplary embodiments shown in Figs. 5a and 5b, 6a and 6b and 7a and 7b, a reduction in the working volume of the airbag 1 is achieved in each case by the additional cavity 16a, 16b; 16 and 17 formed by the cut of the respective airbag 1. As a result, a correspondingly smaller amount of gas is required for inflating the airbag and a smaller, lighter gas generator can be used for this.

Thus, as a result, in the case of the exemplary embodiments according to Figs. 5a and 5b, 6a and 6b and 7a and 7b, specific adaptation of the cut of the airbag covering to the space available within the vehicle, in particular between the dashboard, window and occupant, has the effect of achieving optimum protection of the occupant with the required amount of gas being as small as possible.

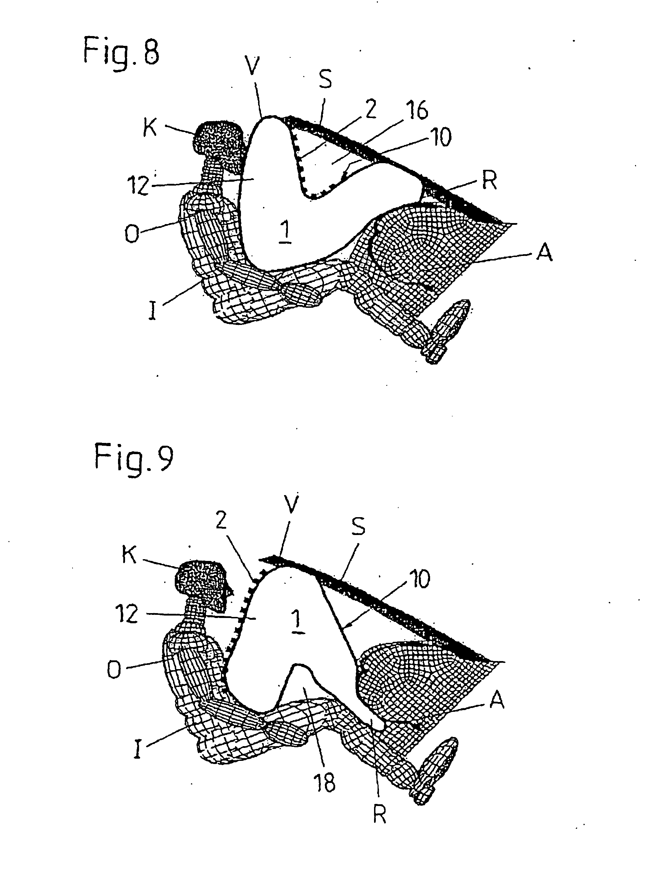

Fig. 8 shows a modification of the exemplary embodiment from Figs. 6a and 6b, in which the sheet-like element 2 does not extend directly on the front side V of the airbag 1 and thus does not completely cover the gap (15), seen from the head K of the vehicle occupant I, formed between the two airbag sections 11, 12. Rather, the sheet-like element 2 extends from the front side V of the airbag 1 into a transition region between the front side V and the rear side R of the airbag 1, so that a region of the gap formed between the airbag sections 11, 12, which region faces the head K and upper body O, is not covered by the sheet-like element 2. Accordingly, in the event of a crash the vehicle occupant I enters with his/her head K and his/her upper body O initially a certain distance into the region between the two airbag sections 11, 12 (cf. Fig. 6b) on the front side V of the airbag arrangement before he/she is intercepted by the sheet-like element 2 spanning the gap between these two airbag sections. The described arrangement of the sheet-like element 2 is made possible; in particular, by the additional indentation 16 of the airbag 1, which indentation is partially bounded by the sheet-like element 2.

As a result, the airbag arrangement illustrated in Fig. 8 is therefore distinguished by the sheet-like element 2 on the front side V of the airbag 1 not running directly at its front end which faces the head K and upper body O of the vehicle occupant I, but rather being offset relative to this front end by a certain distance toward the rear side R of the airbag 1. The sheet-like element 2 thereby spans only those regions of the gap formed between the airbag sections that - as seen from the head K and upper body O of the vehicle occupant I - lie behind the sheet-like element 2. Accordingly, in a crash-induced movement toward the front side V of the airbag 1, the vehicle occupant I enters with his/her head K and upper body O first of all into those regions of said gap that lie in front of the sheet-like element 2 before said occupant is intercepted by the sheet-like element 2.

Fig. 9 shows a further modification of the airbag arrangement from Figs. 6a and 6b, one difference being that the additional indentation 18 of the airbag 1 faces the knee and thigh region of the occupant I to be protected (and not the windshield S of the vehicle as in Fig. 6a). The airbag 1 shown in Fig. 9 is configured so that the rear end of the airbag 1 is fastened to the lower region of the dashboard A of a motor vehicle. As a result, the airbag 1 forms, in the region of its rear end, knee protection for the vehicle occupant I. Thus, the airbag includes a section which is used as a restraining element for the knees of the vehicle occupant in the event of a crash.

According to another embodiment of the present invention, a passenger side airbag module is provided. The passenger side airbag may be formed as described in any of the aforementioned embodiments. Furthermore, the inflator provided in the passenger side airbag module would be of the type normally found in a driver side module (i.e., for a smaller volume airbag). The inflator would provide an output in the range of 180 to 320 kPa. The inflator could, according to another embodiment, provide an output in the range of 200 to 250 kPa. According to another embodiment, the inflator provides an output in the range of 250 to 300 kPa. The volume of the airbag included in the passenger side airbag module is in the range of 50 to 95L. In another embodiment, the volume of the airbag is in the range of 55 to 90 L. According to another embodiment, the volume of the airbag is in the range of 65 to 75L. The volume of the airbag in yet another embodiment is in the range of 70 to 85 L. In order to bridge the distance between instrument panel and passenger a twin airbag may be used. This arrangement improves over a conventional passenger airbag, wherein the airbag typically is around 100 liters or more.

Thus, according to the present invention a two-chamber airbag is provided. The advantages of the two chamber cushion or membrane bag are described above. In general, however, the use of a two-chamber airbag allows for a reduction in airbag volume of approximately 30 percent. Furthermore, if the airbag can be designed for without the consideration of un-belted vehicle passengers, the volume reductions can be even greater.

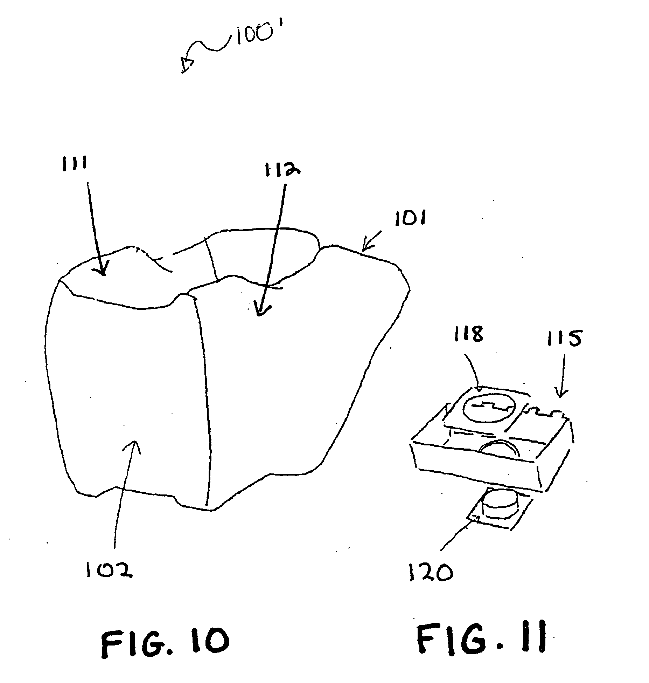

As shown in Figs. 10-21, according to an embodiment of the present invention the passenger side airbag module 100' includes driver side gas inflator 120, a two-chamber airbag 101 and the necessary connecting and housing parts. For example, the module 100' can include a module housing 115 and a bag ring 118, as shown in Fig. 11. The inflator 120 is preferably a disc type inflator normally used in driver side airbag modules.. The use of a disc type inflator 120 instead of the conventional tube type inflator normally used in passenger-side airbag provides for constructional advantages. The airbag 101 is a passenger-side airbag.

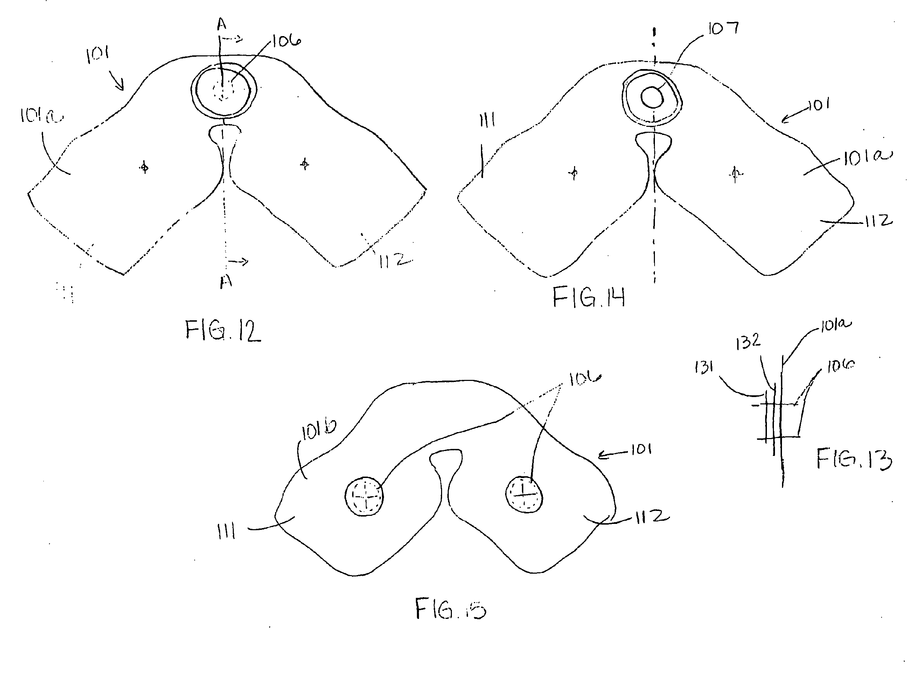

The two chamber airbag employed in the passenger side module can be made following a relatively straightforward arrangement. The airbag is formed by connecting two "butterfly" shaped fabric panels (or plates) 101a, 101b, as shown in, for example, Figs. 12-15, to create two airbag sections 111 and 112.

Figure 12 shows the outer panel 101a. The airbag 101 includes a seam 106 to connect at least one protector cloth 131 connected to the outer panel 101a, as can be seen in Figs. 12 and 13. Fig. 13 shows two protector cloths 131, 132 connected to the outer panel 101a of the airbag 101. The protector cloths 131, 132 may be positioned on any suitable location of the airbag 101, but are preferably positioned in the vicinity of the inflator to protect the panel 101 a from hot inflation gases.

A hole 107 for the inflator 120 may be punched out near the protector cloths 131, 132, as shown in Fig. 14. Inner panel 101b, shown in Fig. 15 may also include sewn stitches 106 for patch cloths, or the like.

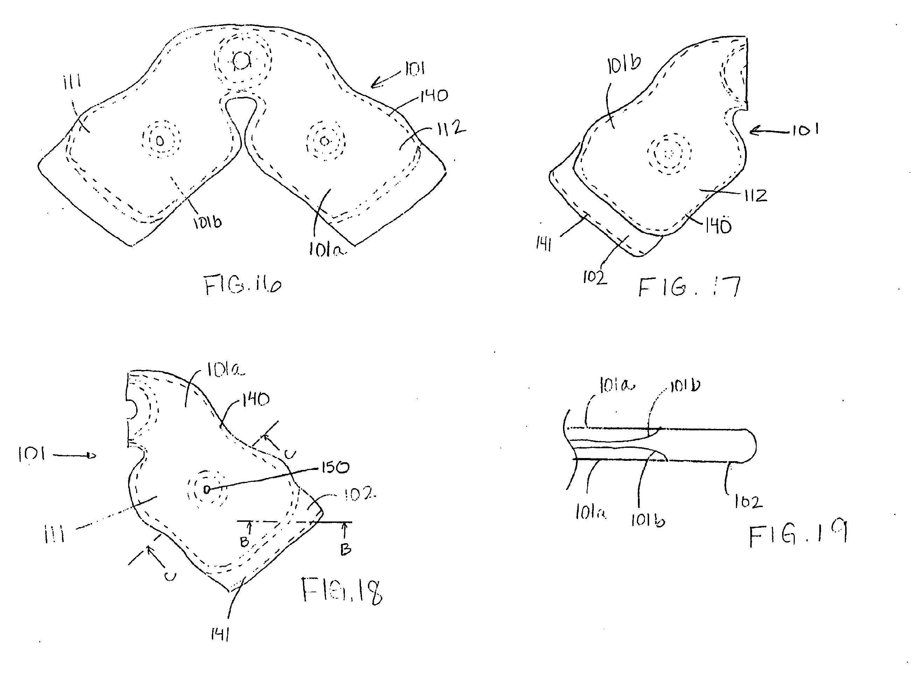

Fig. 16 is a top view showing the two panels 101 a, 101b laying flat with the outer panel 101a overlying the inner panel 101b. After the two panels 101a and 101b are connected by a main seam 140 as shown in Fig. 16, the airbag 101 may be folded up (similarly to butterfly wings) and connected with a membrane 102 at the passenger side of the airbag 101, as shown in Fig. 17. The membrane 102 can be integral with one or both ends of the outer panel 101a (attached or integral with one or both chambers 111, 112), or a separate piece. Fig. 19 shows a side view of an exemplary airbag 101 with outer panel 101a, inner panel 101b and membrane 102. Sewn seams are omitted from Fig. 19 for sake of clarity.

In the embodiment according to the invention shown in Fig. 17, the membrane 102 is sewn together with sewn seam 141. When sewn, the airbag 101 orientation is reversed so that the sides or wings of the outer panel 101a are adjacent, as shown in Fig. 17. After sewing, the airbag 101 orientation is returned to normal so that the sides or wings of the inner panel 101b are adjacent, as shown in Fig. 18.

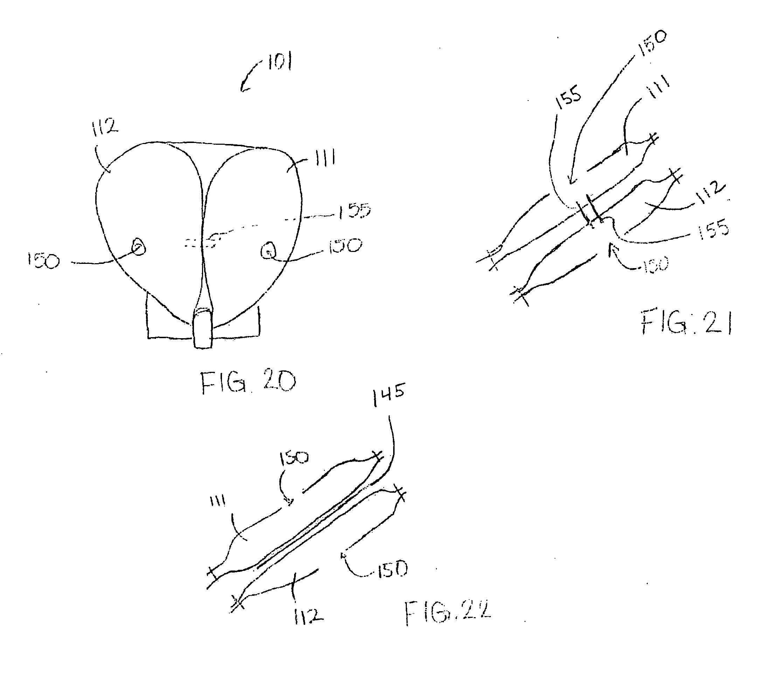

Both chambers 111, 112 may be connected together via a sewn seam 155 in vent holes 150. Conventionally, an airbag is joined by stitching the outer periphery of an outer panel after an inner panel is folded back and connected. However, many man-hours are required to stitch such a conventional airbag in three dimensions. The reduction of man-hours can be accomplished by connecting two chambers 111, 112 together using the access provided by the vent holes 150, which only requires stitching in two dimensions. Each chamber 111, 112 includes a vent hole 150. When the airbag 101 is folded such that a first chamber 111 is folded on to a second chamber 112 and the vent holes 150 align, a sewn seam 155 is stitched through the vent holes 150, joining portions of the chambers 111, 112, such as shown in Figs. 20 and 21.

In yet another embodiment, two airbag chambers 111, 112 can be connected together through the vent holes 150 by a rivet, fastener, or other appropriate device, such as adhesive.

In another embodiment, the airbag 101 can include a patch cloth 145, as shown in Fig. 22.

According to another embodiment, the inflator 120, such as the driver-side disc inflator, is configured to inflate the airbag 101, while having an output in the range of 180 to 320 kPa. The airbag 101, a passenger-side airbag, is configured to have an inflation volume in the range of 50 to 95 L.

According to yet another embodiment, a ratio between a real volume of the airbag 101 and an effective volume for occupant restraint is in a rage of 1:1.2 to 1:2. For exemplary purposes only, when a AM50 percentile dummy is used in a collision at a speed of 48 km/h (30 mph), conventionally, an inflator with an output of approximately 450 kPa for a airbag inflation volume of 120L is used. However, an inflation volume in a airbag 101 in the range of 50 to 95L, with an inflator output in the range of 180 to 320 kPa is also sufficient.

Given the disclosure of the present invention, one versed in the art would appreciate that there may be other embodiments and modifications.

## Claims

1. An airbag module, comprising:
a two chamber twin airbag (1; 101); and
an inflator (120) configured to have an output of 180 to 320 kPa,
wherein the airbag (1; 101) is configured to have an inflation volume in the range of 50 to 95 L,
wherein each of the twin chambers (11, 12; 111, 112) includes a vent hole (150) positioned across the chambers (11, 12; 111, 112) from a connection point between the twin chambers (11, 12; 111, 112),
**characterized by** a connection device for connecting together the twin chambers (11, 12, 111, 112) through the vent holes (150).

2. The airbag module of claim 1, wherein the airbag (1; 101) includes two butterfly fabric panels (100; 101a, 101b).

3. The airbag module of claim 2, wherein the two butterfly fabric panels (100; 101a, 101b) are connected by a main seam (N; 140) extending along a periphery of the two fabric panels (100; 101a, 101b).

4. The airbag module of any one of claims 1-3, wherein the airbag (1; 101) includes a membrane (2; 102) connected to each of the two chambers (11, 12; 111, 112) of the airbag (1; 101) in the front of the airbag facing an occupant (I).

5. The airbag module of any one of claims 1-3, wherein at least one of the two chambers (11, 12; 111, 112) of the airbag (1; 101) includes a membrane (2; 102).

6. The airbag module of any one of claims 1-5, wherein the airbag is a passenger airbag (1; 101).

7. The airbag module of any one of claims 1-6, wherein the inflator is a disc inflator (120).

8. The airbag module of any one of claims 1-7, wherein the airbag (1; 101) is configured to have an inflation volume in the range of 55 to 90 L.

9. The airbag module of any one of claims 1-8, wherein the airbag (1; 101) is configured to have an inflation volume in the range of 65 to 75 L.

10. The airbag module of any one of claims 1-8, wherein the airbag (1; 101) is configured to have an inflation volume in the range of 70 to 85 L.

11. The airbag module according to any one of claims 1-10, wherein the ratio between a real volume of the airbag (1; 101) and an effective volume for occupant (I) restraint is in the range of 1:1.2 and 1:2.

## Patentansprüche

1. Airbagmodul, umfassend:
einen Doppelairbag mit zwei Kammern (1; 101); und
einen Gasgenerator (120), welcher dazu ausgestaltet ist, eine Ausgangsleistung von 180-320 kPa aufzuweisen,
wobei der Airbag (1; 101) dazu ausgestaltet ist, ein Aufblähvolumen im Bereich von 50-95 1 aufzuweisen,
wobei jede der Doppelkammern (11, 12; 111, 112) eine Durchlassöffnung (150) beinhaltet, welche ausgehend von einem Verbindungspunkt zwischen den Doppelkammern (11, 12; 111, 112) auf der anderen Seite der Kammern (11, 12; 111, 112) positioniert ist,
**gekennzeichnet durch** eine Verbindungsvorrichtung, um die Doppelkammern (11, 12; 111, 112) **durch** die Durchlassöffnungen (150) miteinander zu verbinden.

2. Airbagmodul nach Anspruch 1, wobei der Airbag (1; 101) zwei schmetterlingsartige Gewebeelemente (100; 101a, 101b) beinhaltet.

3. Airbagmodul nach Anspruch 2, wobei die zwei schmetterlingsartigen Gewebeelemente (100; 101a, 101b) durch eine Hauptnaht (N; 140) verbunden sind, welche sich entlang eines Außenbereichs der zwei Gewebeelemente (100; 101a, 101b) erstreckt.

4. Airbagmodul nach einem der Ansprüche 1-3, wobei der Airbag (1; 101) eine Membran (2; 102) beinhaltet, welche an der einem Insassen (I) zugewandten Vorderseite des Airbags mit jeder der zwei Kammern (11, 12; 111, 112) des Airbags (1; 101) verbunden ist.

5. Airbagmodul nach einem der Ansprüche 1-3, wobei wenigstens eine der zwei Kammern (11, 12; 111, 112) des Airbags (1; 101) eine Membran (2; 102) beinhaltet.

6. Airbagmodul nach einem der Ansprüche 1-5, wobei der Airbag ein Fahrgastairbag (1; 101) ist.

7. Airbagmodul nach einem der Ansprüche 1-6, wobei der Gasgenerator ein Scheibengasgenerator (120) ist.

8. Airbagmodul nach einem der Ansprüche 1-7, wobei der Airbag (1; 101) dazu ausgestaltet ist, ein Aufblähvolumen im Bereich von 55-90 1 aufzuweisen.

9. Airbagmodul nach einem der Ansprüche 1-8, wobei der Airbag (1; 101) dazu ausgestaltet ist, ein Aufblähvolumen im Bereich von 65-75 1 aufzuweisen.

10. Airbagmodul nach einem der Ansprüche 1-8, wobei der Airbag (1; 101) dazu ausgestaltet ist, ein Aufblähvolumen im Bereich von 70-85 1 aufzuweisen.

11. Airbagmodul nach einem der Ansprüche 1-10, wobei das Verhältnis zwischen einem tatsächlichen Volumen des Airbags (1; 101) und einem effektiven Volumen zum Zurückhalten eines Insassen (I) im Bereich von 1:1,2 bis 1:2 ist.

## Revendications

1. Un module de coussin de sécurité gonflable comprenant :
un coussin de sécurité gonflable double à deux chambres (1; 101); et
un gonfleur (120) configuré pour avoir une sortie de 180 à 320 kPa,
dans lequel le coussin de sécurité gonflable (1 ; 101) est configuré pour avoir un volume de gonflage dans la plage de 50 à 95 L,
dans lequel chacune des chambres doubles (11, 12 ; 111, 112) comprend un trou d'évent (150) positionné à travers les chambres (11, 12 ; 111, 112) à partir d'un point de liaison entre les chambres doubles (11, 12 ; 111, 112),
**caractérisé par** un dispositif de liaison pour relier ensemble les chambres doubles (11, 12 ; 111, 112) à travers les trous d'évent (150).

2. Le module de coussin de sécurité gonflable selon la revendication 1, dans lequel le coussin de sécurité gonflable (1 ; 101) comprend deux panneaux en tissu en forme de papillon (100 ; 101a, 101b).

3. Le module de coussin de sécurité gonflable selon la revendication 2, dans lequel les deux panneaux en tissu en forme de papillon (100 ; 101a, 101b) sont reliés par une couture principale (N ; 140) qui s'étend le long d'une périphérie des deux panneaux en tissu (100 ; 101a, 101b).

4. Le module de coussin de sécurité gonflable selon l'une quelconque des revendications 1 à 3, dans lequel le coussin de sécurité gonflable (1 ; 101) comprend une membrane (2 ; 102) reliée à chacune des chambres doubles (11, 12 ; 111, 112) du coussin de sécurité gonflable (1 ; 101) à l'avant du coussin de sécurité gonflable faisant face à un occupant (I).

5. Le module de coussin de sécurité gonflable selon l'une quelconque des revendications 1 à 3, dans lequel au moins l'une des deux chambres (11, 12 ; 111, 112) du coussin de sécurité gonflable (1 ; 101) comprend une membrane (2 ; 102).

6. Le module de coussin de sécurité gonflable selon l'une quelconque des revendications 1 à 5, dans lequel le coussin de sécurité gonflable est un coussin de sécurité gonflable de passager (1 ; 101).

7. Le module de coussin de sécurité gonflable selon l'une quelconque des revendications 1 à 6, dans lequel le gonfleur est un gonfleur à disque (120).

8. Le module de coussin de sécurité gonflable selon l'une quelconque des revendications 1 à 7, dans lequel le coussin de sécurité gonflable (1 ; 101) est configuré pour avoir un volume de gonflage dans la plage de 55 à 90 L.

9. Le module de coussin de sécurité gonflable selon l'une quelconque des revendications 1 à 8, dans lequel le coussin de sécurité gonflable (1 ; 101) est configuré pour avoir un volume de gonflage dans la plage de 65 à 75 L.

10. Le module de coussin de sécurité gonflable selon l'une quelconque des revendications 1 à 8, dans lequel le coussin de sécurité gonflable (1; 101) est configuré pour avoir un volume de gonflage dans la plage de 70 à 85 L.

11. Le module de coussin de sécurité gonflable selon l'une quelconque des revendications 1 à 10, dans lequel le rapport entre un volume réel du coussin de sécurité gonflable (1 ; 101) et un volume effectif pour la retenue d'un occupant (I) est dans la plage de 1:1,2 et 1:2.
